# EUROPÄISCHE PATENTSCHRIFT

(11) **EP 2 844 957 B1**
(45) Veröffentlichungstag und Bekanntmachung des Hinweises auf die Patenterteilung: **15.12.2021**
(21) Anmeldenummer: 13766885.1
(22) Anmeldetag: 17.08.2013
(51) Int. Cl.: G01F 1/58, G01F 1/60

(54) **MAGNETISCH-INDUKTIVES DURCHFLUSSMESSGERÄT**
MAGNETIC-INDUCTIVE FLOWMETER
APPAREIL DE MESURE DE DÉBIT À INDUCTION MAGNÉTIQUE

(30) Priorität: 21.08.2012 DE 102012016404
(43) Veröffentlichungstag der Anmeldung: 11.03.2015
(73) Patentinhaber: Krohne AG, 4019 Basel (CH)
(72) Erfinder: BROCKHAUS, Helmut, 46145 Oberhausen (DE); FLORIN, Wilhelm, 47198 Duisburg (DE)
(74) Vertreter: Gesthuysen Patentanwälte
(86) Internationale Anmeldenummer: PCT/EP2013/002476
(87) Internationale Veröffentlichungsnummer: WO 2014/029484

(56) Entgegenhaltungen:
- EP-A1- 0 548 439
- EP-A1- 0 846 935
- EP-A1- 1 536 211
- EP-A1- 2 169 360
- JP-A- S58 109 813
- US-A- 4 262 542
- US-A- 4 586 144
- US-A1- 2001 013 255
- US-A1- 2003 167 836
- None

## Beschreibung

Die Erfindung betrifft ein magnetisch-induktives Durchflussmessgerät, mit einer Mehrzahl von Funktionseinheiten und mit einem allen Funktionseinheiten gemeinsamen Gehäuse, wobei jede Funktionseinheit zumindest ein Messrohr für den Durchfluss eines elektrisch leitenden Mediums, eine Magnetfelderzeugungseinrichtung zur Erzeugung eines zumindest auch senkrecht zur Längsachse des Messrohrs verlaufenden Magnetfeldes und mindestens zwei Messelektroden aufweist und wobei die virtuelle Verbindungslinie der beiden Messelektroden zumindest im Wesentlichen senkrecht zur Richtung des das Messrohr senkrecht zur Längsachse des Messrohrs durchsetzenden Magnetfeldes verläuft.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. K.W. Bonfig, 3. Auflage, Vulkan-Verlag Essen, 2002, Seiten 123 bis 167, und auch auf die Literaturstelle "Grundlagen Magnetisch-Induktive Durchflussmessung" von Dipl.-Ing. Friedrich Hoffmann, 3. Auflage, 2003, Druckschrift der Firma KROHNE Messtechnik GmbH & Co. KG, verwiesen.

Das grundlegende Prinzip eines magnetisch-induktiven Durchflussmessgeräts zur Durchflussmessung eines strömenden Mediums geht auf Michael Faraday zurück, der bereits im Jahre 1832 vorgeschlagen hat, das Prinzip der elektromagnetischen Induktion zur Messung der Strömungsgeschwindigkeit eines elektrisch leitfähigen Mediums anzuwenden.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die mindestens eine Magnetfeldspule, üblicherweise zwei Magnetfeldspulen aufweist, ein während des Messvorgangs sich zeitlich veränderndes Magnetfeld erzeugt wird und das Magnetfeld wenigstens teilweise das durch ein Messrohr strömende elektrisch leitfähige Medium durchsetzt. Dabei weist das erzeugte Magnetfeld wenigstens eine Komponente senkrecht zur Längsachse des Messrohrs bzw. senkrecht zur Strömungsrichtung des Mediums auf.

Wenn es einleitend heißt, dass jede Funktionseinheit eine Magnetfelderzeugungseinrichtung zur Erzeugung eines zumindest auch senkrecht zur Längsachse des Messrohrs verlaufenden Magnetfeldes aufweist, dann sei hier noch einmal darauf hingewiesen, dass das Magnetfeld zwar vorzugsweise senkrecht zur Längsachse des Messrohrs bzw. senkrecht zur Strömungsrichtung des Mediums verläuft, ausreichend jedoch ist, dass eine Komponente des Magnetfeldes senkrecht zur Längsachse des Messrohrs bzw. senkrecht zur Strömungsrichtung des Mediums verläuft.

Eingangs ist ausgeführt worden, dass zu jeder Funktionseinheit mindestens zwei Messelektroden gehören, wobei die virtuelle Verbindungslinie der beiden Messelektroden zumindest im Wesentlichen senkrecht zur Richtung des das Messrohr durchsetzenden Magnetfeldes verläuft. Vorzugsweise verläuft die virtuelle Verbindungslinie der beiden Messelektroden tatsächlich - mehr oder weniger - senkrecht zur Richtung des das Magnetfeld durchsetzenden Magnetfeldes.

Die durch Induktion im strömenden, elektrisch leitfähigen Medium erzeugte elektrische Feldstärke kann durch direkt, also galvanisch mit dem Medium in Kontakt stehende Messelektroden als elektrische Spannung gemessen werden oder auch von nicht direkt, also nicht galvanisch mit dem Medium in Kontakt stehenden Elektroden kapazitiv detektiert werden. Aus der gemessenen Spannung wird dann der Durchfluss des strömenden Mediums durch das Messrohr abgeleitet.

Der Messfehler bei im Stand der Technik bekannten magnetisch-induktiven Durchflussmessgeräten ist heute relativ klein, ein Messfehler kleiner als 0,2 % kann realisiert werden.

Zu bekannten magnetisch-induktiven Durchflussmessgeräten wird beispielhaft auf die deutschen Offenlegungsschriften 197 08 857, 10 2004 063 617, 10 2008 057 755 und 10 2008 057 756 und EP0548439 verwiesen.

In einer Vielzahl von Anwendungen ist es erforderlich, mehrere magnetisch-induktive Durchflussmessgeräte benachbart zueinander anzuordnen und zu betreiben.

Ein erstes und ein zweites magnetisch-induktives Durchflussmessgerät sind für die folgenden Betrachtungen dann benachbart, wenn wenigstens das von der Magnetfelderzeugungseinrichtung des ersten Durchflussmessgeräts erzeugte Magnetfeld das Messrohr des zweiten Durchflussmessgeräts zumindest teilweise durchsetzt. Selbstverständlich ist eine benachbarte Anordnung nicht auf zwei Durchflussmessgeräte begrenzt.

Oftmals ist es nicht möglich, beispielsweise bei begrenztem räumlichen Verhältnissen, den räumlichen Abstand von magnetisch-induktiven Durchflussmessgeräten so. groß zu wählen, dass sie nicht benachbart sind. Eine Abschirmung der Durchflussmessgeräte wäre mit zusätzlichen Kosten und Aufwand verbunden.

Führen das erste Durchflussmessgerät und das zweite Durchflussmessgerät im Betrieb Messvorgänge durch, so ist unbekannt zum einen, ob sich die Messvorgänge der beiden benachbarten Durchflussmessgeräte zeitlich überlappen, und zum anderen, wie groß im Fall einer zeitlichen Überlappung die im Allgemeinen nicht konstante zeitliche Überlappung ist.

Wird eine zeitliche Überlappung der Messvorgänge der beiden benachbarten Durchflussmessgeräte angenommen, so überlagern sich im Messrohr des zweiten Durchflussmessgeräts das von der Magnetfelderzeugungseinrichtung des zweiten Durchflussmessgeräts erzeugte Magnetfeld und das sich bis zum Messrohr des zweiten Durchflussmessgeräts erstreckende, von der Magnetfelderzeugungseinrichtung des ersten Durchflussmessgeräts erzeugte Magnetfeld. Die Überlagerung der beiden Magnetfelder hat eine auf unbekannte Weise variierende induzierte elektrische Spannung und eine entsprechende Beeinflussung der Durchflussmessungen zur Folge, was eine Reduktion der Messqualität bedeutet. So kann beispielsweise bei konstantem Durchfluss durch das Messrohr eines Durchflussmessgeräts ein variierender Durchfluss von dem Durchflussmessgerät angezeigt werden. Selbstverständlich beeinflusst auch der Messvorgang des zweiten Durchflussmessgeräts den gemessenen Wert des Durchflusses des ersten Durchflussmessgeräts.

Mit dem Problem der Verbesserung der Messqualität bei benachbart angeordneten magnetisch-induktiven Durchflussmessgeräten und einer verbesserten Anordnung benachbarter magnetisch-induktiver Durchflussmessgeräte befasst sich bereits die am 9. September 2011 durchgeführte, also nicht zum Stand der Technik gehörende deutsche Patentanmeldung 10 2011 112 763.5. Diese Patentanmeldung lehrt verfahrensmäßig, zur Vermeidung von Variationen von gegenseitigen Beeinflussungen der Durchflussmessungen durch die Magnetfelder benachbarter magnetisch-induktiver Durchflussmessgeräte Messvorgänge einzelner benachbarter Durchflussmessgeräte zu synchronisieren.

Nach dem, was einleitend ausgeführt worden ist, geht es vorliegend nicht um räumlich getrennte, jedoch benachbart angeordnete magnetisch-induktive Durchflussmessgeräte, geht es vielmehr um ein magnetisch-induktives Durchflussmessgerät mit einer Mehrzahl von Funktionseinheiten und mit einem allen Funktionseinheiten gemeinsamen Gehäuse. Es geht also um mehrere magnetisch-induktive Durchflussmessgeräte, die insoweit nicht räumlich getrennt sind, als sie ein gemeinsames Gehäuse aufweisen. Ein solches Durchflussmessgerät wird von der Firma Kirchgaesser Industrie Elektronik GmbH unter der Bezeichnung "MULTIMIDEX" hergestellt und vertrieben.

Der Erfindung liegt nun die Aufgabe zugrunde, ein magnetisch-induktives Durchflussmessgerät der eingangs beschriebenen Art anzugeben, das relativ einfach aufgebaut ist und einfach hergestellt werden kann.

Die der Erfindung zugrunde liegende Aufgabe wird durch ein Messgerät gemäß einem der Ansprüche 1-3 gelöst.

Für die der Erfindung zugrunde liegende Aufgabe gibt es zusätzlich zu der Reihenschaltung der Feldspulen, zunächst drei Lösungsansätze, nämlich
a) im Gehäuse die Verwirklichung eines gemeinsamen Mediumszuflussanschlusses oder eines gemeinsamen Mediumsabflussanschlusses für die Messrohre aller Funktionseinheiten,
b) im Gehäuse die Verwirklichung einer gemeinsamen Stromversorgung für die Magnetfelderzeugungseinrichtungen aller Funktionseinheiten,
c) im Gehäuse die Verwirklichtung einer gemeinsamen Auswerteeinheit für die Messelektroden aller Funktionseinheiten.

Die zuvor aufgezeigten drei Lösungsansätze können alternativ oder kumulativ realisiert werden, also, alternativ, a) oder b) oder c), oder, kumulativ, a) und b), a) und c), b) und c) oder a) und b) und c).

Bei den magnetisch-induktiven Durchflussmessgeräten der eingangs beschriebenen Art und folglich auch der erfindungsgemäßen Art weisen die Magnetfelderzeugungseinrichtungen aller Funktionseinheiten mindestens eine Feldspule, häufig auch zwei Feldspulen auf. Davon ausgehend geht eine weitere Lehre der Erfindung dahin, die Feldspulen aller Funktionseinheiten in Reihe zu schalten. Das ermöglich nicht nur eine gemeinsame Stromversorgung für die Magnetfelderzeugungseinrichtungen aller Funktionseinheiten, das führt auch dazu, dass alle Feldspulen gleichzeitig synchron angesteuert werden und ein Übersprechen der Magnetfelder zwischen den eng beieinander liegenden Funktionseinheiten konstant ist und in die Kalibrierung einfließen kann.

Bei erfindungsgemäßen magnetisch-induktiven Durchflussmessgeräten, bei denen der zuvor aufgezeigte Lösungsansatz c) verwirklicht ist, werden die an den Messelektroden der einzelnen Funktionseinheiten entstehenden Elektrodenspannungen selbstverständlich separat, aber parallel, das heißt, in für alle Funktionseinheiten gleichen Messphasen gemessen.

Bei erfindungsgemäßen magnetisch-induktiven Durchflussmessgeräten, bei denen der Lösungsansatz c) verwirklicht ist, empfiehlt es sich des weiteren, den zu den einzelnen Funktionseinheiten gehörenden Messelektroden jeweils einen eigenen Vorverstärker nachzuschalten.

Bei den magnetisch-induktiven Durchflussmessgeräten, von denen die Erfindung ausgeht, und bei den erfindungsgemäßen magnetisch-induktiven Durchflussmessgeräten handelt es sich bei den an den Messelektroden der einzelnen Funktionseinheiten entstehenden Elektrodenspannungen um analoge Messwerte. Da es von Vorteil ist, mit digitalen Messwerten zu arbeiten, empfiehlt es sich, die zunächst entstehenden analogen Messwerte zu digitalisieren, also den zu den einzelnen Funktionseinheiten gehörenden Messelektroden jeweils einen eigenen A/D-Wandler nachzuschalten. Sind den zu den einzelnen Funktionseinheiten gehörenden Messelektroden jeweils ein eigener Vorverstärker nachgeschaltet, so wird man die A/D-Wandler den Vorverstärkern nachschalten.

Im übrigen wird man bei erfmdungsgemäßen magnetisch-induktiven Durchflussmessgeräten, bei denen der weiter oben aufgezeigte Lösungsansatz c) verwirklicht ist und den zu den einzelnen Funktionseinheiten gehörenden Messelektroden jeweils ein eigener A/D-Wandler nachgeschaltet ist, gegebenenfalls jeweils den Vorverstärkern nachgeschaltet ist, heute in Verbindung mit A/D-Wandlern üblichen Stand der Technik anwenden. So können die A/D-Wandler über einen digitalen Bus, z. B. I²C oder SPI, abgefragt werden, kann die Abtastgeschwindigkeit so hoch gewählt werden, dass keine Abtastwerte der A/D-Wandler verloren gehen und/oder kann dafür gesorgt sein, dass die A/D-Wandler die Abtastwerte so lange speichern, bis neue Messwerte vorliegen.

Das, was zuvor erläutert worden ist, betrifft die primäre Funktionalität magnetisch-induktiver Durchflussmessgeräte, nämlich das Messen des Durchflusses elektrisch leitender Medien durch ein Messrohr. Man muss sich jedoch nicht darauf beschränken, magnetisch-induktive Durchflussmessgeräte in Bezug auf ihre primäre Funktionalität auszugestalten und weiterzubilden, man kann auch sekundäre Funktionalitäten realisieren.

Zunächst kann eine so genannte sekundäre Funktionalität dadurch realisiert sein, dass mindestens eine Funktionseinheit, vorzugsweise alle Funktionseinheiten eine Schaltungsanordnung zur Leitfähigkeitsmessung, zur Medienerkennung oder / und zur Leerlauferkennung aufweist bzw. aufweisen. Die Leitfähigkeitsmessung, die Medienerkennung oder die Leerlauferkennung kann bei allen Funktionseinheiten gleichzeitig (paralleler Betrieb) oder nacheinander (serieller Betrieb) oder auch nur bei ausgewählten Funktionseinheiten (selektiver Betrieb) erfolgen. Zur Leitfähigkeitsmessung kann je Funktionseinheit ein Differenzstrom mit wechselnder Polarität zwischen den beiden Messelektroden eingeprägt und über die Messung der Spannung an den Messelektroden die Leitfähigkeit zwischen den Messelektroden bestimmt werden.

Im übrigen kann bei dem erfindungsgemäßen magnetisch-induktiven Durchflussmessgerät jede Funktionseinheit einen eigenen Satz von Kalibrierwerten erhalten, die für die Berechnung der verschiedenen Messwerte verwendet wird, insbesondere für die Messung des Durchflusses und gegebenenfalls der Leitfähigkeit. Zu den Kalibrierwerten können gehören eine Geberkonstante, Faktor des Kalibrierwertes für die Durchflussgeschwindigkeitsmessung, eine Nullpunktkonstante, Konstante für den Offset des Kalibrierwertes für die Durchflussgeschwindigkeitsmessung, ein Elektrodenfaktor, Faktor für die Leitfähigkeitsmessung, und eine Nennweitenkonstante, Konstante für den Durchmesser der jeweiligen Funktionseinheit zur Volumendurchflussberechnung auf der Grundlage der Durchflussgeschwindigkeitsmessung.

Damit erfindungsgemäße magnetisch-induktive Durchflussmessgeräte mit "der Außenwelt" kommunizieren können, ist eine bevorzugte Ausführungsform dadurch gekennzeichnet, dass die Auswerteeinheit eine außen liegende digitale Bus-Schnittstelle aufweist, z. B. Can Bus, Modebus, Profibus, FF, E-thernet, ASI. Über die digitale Bus-Schnittstelle können die einzelnen Durchflusswerte ausgelesen werden, gegebenenfalls auch die einzelnen Leitfähigkeitswerte. Auch können die digitalen Bus-Schnittstellen für das Auslesen der Ergebnisse von Durchflussüberwachungen, z. B. Grenzwertüberwachung, verwendet werden. Über die digitale Bus-Schnittstelle können auch Kalibrierwerte eingestellt werden.

Erfindungsgemäße magnetisch-induktive Durchflussmessgeräte werden vorzugsweise bei Maschinen eingesetzt, z. B. bei Reinigungsmaschinen, bei denen Wasser, jedenfalls Feuchtigkeit, auftreten kann, jedenfalls in bestimmten Bereichen solcher Maschinen. Darum geht eine weitere Lehre der Erfindung dahin, dass die Auswerteeinheit erfindungsgemäßer magnetisch-induktiver Durchflussmessgeräte in einem IP-66-, einem IP-67- oder einem IP-68-Gehäuse realisiert ist. In Verbindung damit, oder auch stattdessen, empfiehlt es sich, bei erfindungsgemäßen magnetisch-induktiven Durchflussmessgeräten mit Niederspannung zu arbeiten, also den Anschluss an die Netzspannung, üblicherweise 230 V Wechselspannung, über ein separates Netzteil vorzusehen.

Im Einzelnen gibt es nun verschiedene Möglichkeiten, das erfmdungsgemäße magnetisch-induktive Durchflussmessgerät auszugestalten und weiterzubilden. Dazu wird verwiesen einerseits auf die dem Patentanspruch 1 nachgeordneten Patentansprüche, andererseits auf das nachfolgend beschriebene, in der Zeichnung nur sehr schematisch dargestellte Ausführungsbeispiel. In der Zeichnung zeigen
- Fig. 1: sehr schematisch, den grundsätzlichen Aufbau eines magnetischinduktiven Durchflussmessgeräts,
- Fig. 2: wiederum sehr schematisch, ein magnetisch-induktives Durchflussmessgerät mit einer Mehrzahl von Funktionseinheiten,
- Fig. 3: ein erstes Detail aus einer bevorzugten Ausführungsform eines erfindungsgemäßen magnetisch-induktiven Durchflussmessgeräts und
- Fig. 4: ein zweites Detail aus einer bevorzugten Ausführungsform eines erfindungsgemäßen magnetisch-induktiven Durchflussmessgeräts.

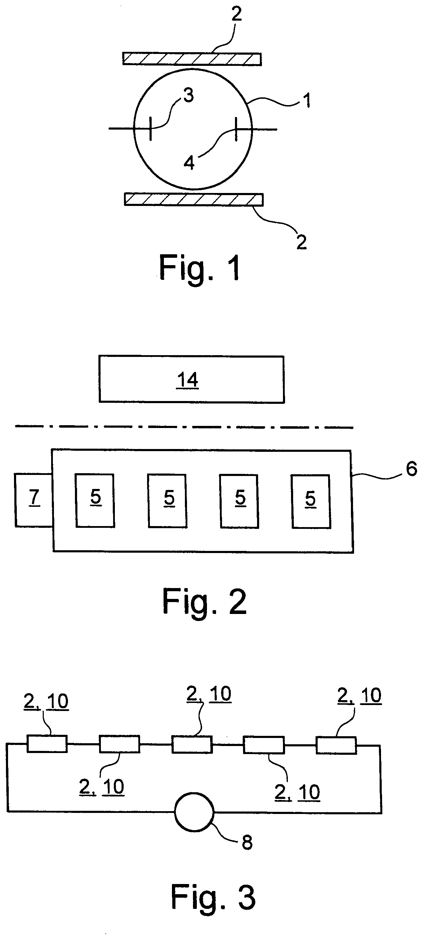

Die Figuren zeigen ein magnetisch-induktives Durchflussmessgerät, zu dem grundsätzlich, wie in der Fig. 1 angedeutet, ein Messrohr 1 für den Durchfluss eines elektrisch leitenden Mediums, eine Magnetfelderzeugungseinrichtung 2 zur Erzeugung eines senkrecht zur Längsachse des Messrohrs 1 verlaufenden Magnetfeldes und mindestens zwei Messelektroden 3, 4 gehören, wobei die virtuelle Verbindungslinie der beiden Messelektroden 3, 4 zumindest im Wesentlichen senkrecht zur Richtung des das Messrohr 1 senkrecht zur Längsachse des Messrohrs 1 durchsetzenden Magnetfeldes verläuft.

In der Fig. 2 ist angedeutet, dass das in Rede stehende magnetisch-induktive Durchflussmessgerät eine Mehrzahl von Funktionseinheiten 5 und ein allen Funktionseinheiten 5 gemeinsames Gehäuse 6 aufweist, wobei jede Funktionseinheit 5 so ausgeführt ist, wie das zuvor in Verbindung mit der Fig. 1 für den grundsätzlichen Aufbau magnetisch-induktiver Durchflussmessgeräte ausgeführt worden ist.

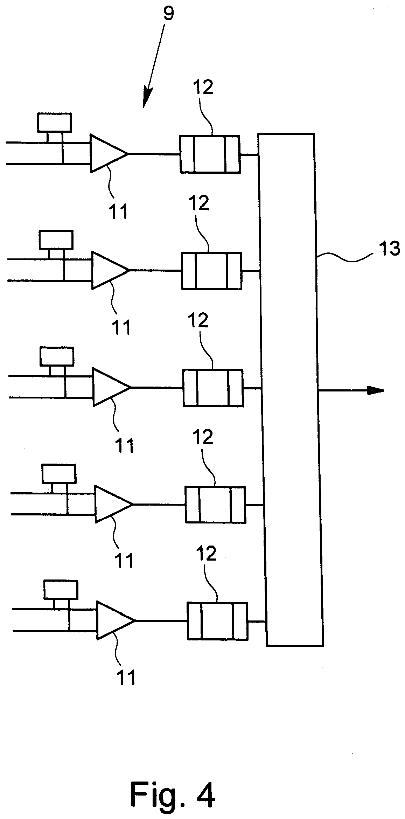

Angedeutet ist in der Fig. 2, dass für das dargestellte magnetisch-induktive Durchflussmessgerät gilt, dass im Gehäuse 6 für die Messrohre 1 aller Funktionseinheiten 5 ein gemeinsamer Mediumszuflussanschluss 7 verwirklicht ist. Demgegenüber ist in der Fig. 3 angedeutet, dass im Gehäuse 6 für die Magnetfelderzeugungseinrichtungen 2 aller Funktionseinheiten 5 eine gemeinsame Stromversorgung 8 verwirklicht ist. In der Fig. 4 ist schließlich angedeutet, dass im Gehäuse 6 für die Messelektroden 3, 4 aller Funktionseinheiten 5 eine gemeinsame Auswerteeinheit 9 verwirklicht ist.

In der Fig. 1, die sehr schematisch den grundsätzlichen Aufbau magnetisch-induktiver Durchflussmessgeräte zeigt, sind die Magnetfelderzeugungseinrichtungen 2 auch nur schematisch angedeutet. Demgegenüber soll der Fig. 3 entnommen werden können, dass die Magnetfelderzeugungseinrichtungen 2 aller Funktionseinheiten 5 mindestens eine Feldspule 10 aufweisen. Ohne weiteres ist erkennbar, dass die Feldspulen 10 aller Funktionseinheiten in Reihe geschaltet sind.

Nicht dargestellt ist, dass die Auswerteeinheit 9 vorzugsweise so ausgeführt ist, dass die an den Messelektroden 3, 4 der einzelnen Funktionseinheiten 5 entstehenden Elektrodenspannungen separat, aber parallel, d. h. in für alle Funktionseinheiten 5 gleichen Messphasen, gemessen werden.

Die Fig. 4 zeigt Einzelheiten in Bezug auf die Auswerteeinheit 9, die für die Messelektroden 3, 4 aller Funktionseinheiten 5 gemeinsam verwirklicht ist. Im Einzelnen gehören zunächst zu den zu den einzelnen Funktionseinheiten 5 gehörenden Messelektroden 3, 4 jeweils ein eigener Vorverstärker 11. Außerdem ist den zu den einzelnen Funktionseinheiten 5 gehörenden Messelektroden 3, 4 jeweils ein eigener A/D-Wandler 12 nachgeschaltet. Im Einzelnen sind die A/D-Wandler 12 den Vorverstärkern 11 nachgeschaltet.

In den Figuren ist nicht dargestellt, dass die A/D-Wandler 12 über einen digitalen Bus, z. B. I² C oder SPI, abgefragt werden können, dass die Abtastgeschwindigkeit so hoch ist, dass keine Abtastwerte der A/D-Wandler 12 verloren gehen und dass die A/D-Wandler 12 die Abtastwerte solange speichern, bis neue Messwerte vorliegen. Nicht dargestellt ist auch, dass mindestens eine Funktionseinheit 5, vorzugsweise alle Funktionseinheiten 5 eine Schaltungsanordnung zur Leitfähigkeitsmessung, zur Medienerkennung oder / und zur Leerlauferkennung aufweist bzw. aufweisen.

In der Fig. 4 ist schließlich noch angedeutet, dass die Auswerteeinheit 9 eine außen liegende digitale Bus-Schnittstelle 13 aufweist.

Erfindungsgemäße magnetisch-induktive Durchflussmessgeräte sollen vorzugsweise bei Maschinen eingesetzt werden können, z. B. bei Reinigungsmaschinen, bei denen Wasser, jedenfalls Feuchtigkeit, auftreten kann, jedenfalls in bestimmten Bereichen solcher Maschinen. Darum wird bei den erfindungsgemäßen magnetisch-induktiven Durchflussmessgeräten das Gehäuse 6 vorzugsweise als IP-66-Gehäuse, als IP-67-Gehäuse oder als IP-68-Gehäuse realisiert. In Verbindung damit, oder auch stattdessen, wird bei erfindungsgemäßen magnetisch-induktiven Durchflussmessgeräten mit Niederspannung gearbeitet, also der Anschluss an die Netzspannung, üblicherweise 230 V Wechselspannung, über ein separates Netzteil 14, wie in Fig. 2 angedeutet, vorgenommen.

## Patentansprüche

1. Magnetisch-induktives Durchflussmessgerät, mit einer Mehrzahl von Funktionseinheiten (5), wobei jede Funktionseinheit (5) zumindest ein Messrohr (1) für den Durchfluss eines elektrisch leitenden Mediums, eine Magnetfelderzeugungseinrichtung (2) zur Erzeugung eines zumindest auch senkrecht zur Längsachse des Messrohrs (1) verlaufenden Magnetfeldes und mindestens zwei Messelektroden (3, 4) aufweist, wobei die virtuelle Verbindungslinie der beiden Messelektroden (3, 4) zumindest im Wesentlichen senkrecht zur Richtung des das Messrohr (1) senkrecht zur Längsachse des Messrohrs (1) durchsetzenden Magnetfeldes verläuft und wobei die Magnetfelderzeugungseinrichtungen (2) aller Funktionseinheiten (5) mindestens jeweils eine Feldspule (10) aufweisen,
**dadurch gekennzeichnet,**
**dass** das magnetisch-induktive Durchflussmessgerät ein allen Funktionseinheiten (5) gemeinsames Gehäuse (6) aufweist,
**dass** im Gehäuse (6) für die Messrohre (1) aller Funktionseinheiten (5) ein gemeinsamer Mediumszuflussanschluss (7) oder ein gemeinsamer Mediumsabflussanschluss verwirklicht ist und
**dass** die Feldspulen (10) aller Funktionseinheiten (5) in Reihe geschaltet sind.

2. Magnetisch-induktives Durchflussmessgerät, mit einer Mehrzahl von Funktionseinheiten (5), wobei jede Funktionseinheit (5) zumindest ein Messrohr (1) für den Durchfluss eines elektrisch leitenden Mediums, eine Magnetfelderzeugungseinrichtung (2) zur Erzeugung eines zumindest auch senkrecht zur Längsachse des Messrohrs (1) verlaufenden Magnetfeldes und mindestens zwei Messelektroden (3, 4) aufweist, wobei die virtuelle Verbindungslinie der beiden Messelektroden (3, 4) zumindest im Wesentlichen senkrecht zur Richtung des das Messrohr (1) senkrecht zur Längsachse des Messrohrs (1) durchsetzenden Magnetfeldes verläuft und wobei die Magnetfelderzeugungseinrichtungen (2) aller Funktionseinheiten (5) mindestens jeweils eine Feldspule (10) aufweisen, insbesondere nach Anspruch 1,
**dadurch gekennzeichnet,**
**dass** das magnetisch-induktive Durchflussmessgerät ein allen Funktionseinheiten (5) gemeinsames Gehäuse (6) aufweist,
**dass** im Gehäuse (6) für die Magnetfelderzeugungseinrichtungen (2) aller Funktionseinheiten (5) eine gemeinsame Stromversorgung (8) verwirklicht ist und
**dass** die Feldspulen (10) aller Funktionseinheiten (5) in Reihe geschaltet sind.

3. Magnetisch-induktives Durchflussmessgerät, mit einer Mehrzahl von Funktionseinheiten (5), wobei jede Funktionseinheit (5) zumindest ein Messrohr (1) für den Durchfluss eines elektrisch leitenden Mediums, eine Magnetfelderzeugungseinrichtung (2) zur Erzeugung eines zumindest auch senkrecht zur Längsachse des Messrohrs (1) verlaufenden Magnetfeldes und mindestens zwei Messelektroden (3, 4) aufweist, wobei die virtuelle Verbindungslinie der beiden Messelektroden (3, 4) zumindest im Wesentlichen senkrecht zur Richtung des das Messrohr (1) senkrecht zur Längsachse des Messrohrs (1) durchsetzenden Magnetfeldes verläuft und wobei die Magnetfelderzeugungseinrichtungen (2) aller Funktionseinheiten (5) mindestens jeweils eine Feldspule (10) aufweisen, insbesondere nach Anspruch 1 oder 2,
**dadurch gekennzeichnet,**
**dass** das magnetisch-induktive Durchflussmessgerät ein allen Funktionseinheiten (5) gemeinsames Gehäuse (6) aufweist,
**dass** im Gehäuse (6) für die Messelektroden (3, 4) aller Funktionseinheiten (5) eine gemeinsame Auswerteeinheit (9) verwirklicht ist und
**dass** die Feldspulen (10) aller Funktionseinheiten (5) in Reihe geschaltet sind.

4. Magnetisch-induktives Durchflussmessgerät nach Anspruch 3, **dadurch gekennzeichnet, dass** die Auswerteeinheit (9) so ausgeführt ist, dass die an den Messelektroden (3, 4) der einzelnen Funktionseinheiten (5) entstehenden Elektrodenspannungen separat, aber parallel, d. h. in für alle Funktionseinheiten (5) gleichen Messphasen, gemessen werden.

5. Magnetisch-induktives Durchflussmessgerät nach einem der Ansprüche 3 bis 4, **dadurch gekennzeichnet, dass** den zu den einzelnen Funktionseinheiten (5) gehörenden Messelektroden (3, 4) jeweils ein eigener Vorverstärker (11) nachgeschaltet ist.

6. Magnetisch-induktives Durchflussmessgerät nach einem der Ansprüche 3 bis 5, **dadurch gekennzeichnet, dass** den zu den einzelnen Funktionseinheiten (5) gehörenden Messelektroden (3, 4) jeweils ein eigener A/D-Wandler (12) nachgeschaltet ist.

7. Magnetisch-induktives Durchflussmessgerät nach Anspruch 5 und 6, **dadurch gekennzeichnet, dass** die A/D-Wandler (12) den Vorverstärkern (11) nachgeschaltet sind.

8. Magnetisch-induktives Durchflussmessgerät nach Anspruch 6 oder 7, **dadurch gekennzeichnet, dass** die A/D-Wandler (12) über einen digitalen Bus, z. B. I²C oder SPI, abgefragt werden können.

9. Magnetisch-induktives Durchflussmessgerät nach Anspruch 8, **dadurch gekennzeichnet, dass** die Abtastgeschwindigkeit so hoch ist, dass keine Abtastwerte der A/D-Wandler (12) verloren gehen.

10. Magnetisch-induktives Durchflussmessgerät nach einem der Ansprüche 6 bis 9, **dadurch gekennzeichnet, dass** die A/D-Wandler (12) die Abtastwerte so lange speichern, bis neue Messwerte vorliegen.

11. Magnetisch-induktives Durchflussmessgerät nach einem der Ansprüche 3 bis 10, **dadurch gekennzeichnet, dass** die Auswerteeinheit (9) eine außen liegende digitale Bus-Schnittstelle (13) aufweist.

12. Magnetisch-induktives Durchflussmessgerät nach einem der Ansprüche 3 bis 11, **dadurch gekennzeichnet, dass** die Auswerteeinheit in einem IP-66-, einem IP-67- oder einem IP-68-Gehäuse realisiert ist.

13. Magnetisch-induktives Durchflussmessgerät nach einem der Ansprüche 3 bis 12, **dadurch gekennzeichnet, dass** die Stromversorgung (8) für die Magnetfelderzeugungseinrichtungen (2) und für die Auswerteeinheit (9) für Niederspannung ausgelegt ist.

14. Magnetisch-induktives Durchflussmessgerät nach einem der Ansprüche 1 bis 13, **dadurch gekennzeichnet, dass** mindestens eine Funktionseinheit (5), vorzugsweise alle Funktionseinheiten (5) eine Schaltungsanordnung zur Leitfähigkeitsmessung, zur Medienerkennung oder / und zur Leerlauferkennung aufweist bzw. aufweisen.

## Claims

1. A magnetic-inductive flow meter, comprising a plurality of functional units (5), wherein each functional unit (5) has at least one measuring tube (1) for the flow of an electrically conductive medium, a magnetic field generating device (2) for generating a magnetic field extending at least also perpendicular to the longitudinal axis of the measuring tube (1), and at least two measuring electrodes (3, 4), wherein the virtual connecting line of the two measuring electrodes (3, 4) runs at least substantially perpendicular to the direction of the magnetic field passing through the measuring tube (1) perpendicular to the longitudinal axis of the measuring tube (1), and wherein the magnetic field generating devices (2) of all functional units (5) each have at least one field coil (10),
**characterized in,**
**that** the magnetic-inductive flowmeter has a housing (6) which is common to all functional units (5),
**that** a common medium inflow connection (7) or a common medium outflow connection is implemented in the housing (6) for the measuring tubes (1) of all functional units (5), and
**that** the field coils (10) of all functional units (5) are connected in series.

2. Magnetic-inductive flow meter, comprising a plurality of functional units (5), wherein each functional unit (5) has at least one measuring tube (1) for the flow of an electrically conductive medium, a magnetic field generating device (2) for generating a magnetic field extending at least also perpendicular to the longitudinal axis of the measuring tube (1), and at least two measuring electrodes (3, 4), wherein the virtual connecting line of the two measuring electrodes (3, 4) runs at least substantially perpendicular to the direction of the magnetic field passing through the measuring tube (1) perpendicular to the longitudinal axis of the measuring tube (1), and wherein the magnetic field generating devices (2) of all functional units (5) each have at least one field coil (10), in particular according to claim 1,
**characterized in**
**that** the magnetic-inductive flowmeter has a housing (6) which is common to all functional units (5),
**that** a common power supply (8) is implemented in the housing (6) for the magnetic field generating devices (2) of all functional units (5), and
**that** the field coils (10) of all functional units (5) are connected in series.

3. Magnetic-inductive flow meter, comprising a plurality of functional units (5), wherein each functional unit (5) has at least one measuring tube (1) for the flow of an electrically conductive medium, a magnetic field generating device (2) for generating a magnetic field extending at least also perpendicular to the longitudinal axis of the measuring tube (1), and at least two measuring electrodes (3, 4), wherein the virtual connecting line of the two measuring electrodes (3, 4) runs at least substantially perpendicular to the direction of the magnetic field passing through the measuring tube (1) perpendicular to the longitudinal axis of the measuring tube (1), and wherein the magnetic field generating devices (2) of all functional units (5) each have at least one field coil (10), in particular according to claim 1 or 2,
**characterized in**
**that** the magnetic-inductive flowmeter has a housing (6) which is common to all functional units (5),
**that** a common evaluation unit (9) is implemented in the housing (6) for the measuring electrodes (3, 4) of all functional units (5), and
**that** he field coils (10) of all functional units (5) are connected in series.

4. Magnetic-inductive flowmeter according to claim 3, **characterized in that** the evaluation unit (9) is designed in such a way that the electrode voltages arising at the measuring electrodes (3, 4) of the individual functional units (5) are measured separately, but in parallel, i.e. in measurement phases which are the same for all functional units (5).

5. Magnetic-inductive flow meter according to any one of claims 3 to 4, **characterized in that** a separate preamplifier (11) is connected downstream of the measuring electrodes (3, 4) belonging to the individual functional units (5).

6. Magnetic-inductive flowmeter according to any one of claims 3 to 5, **characterized in that** a separate A/D converter (12) is connected downstream of the measuring electrodes (3, 4) belonging to the individual functional units (5).

7. Magnetic-inductive flowmeter according to claims 5 and 6, **characterized in that** the A/D converters (12) are connected downstream of the preamplifiers (11).

8. Magnetic-inductive flow meter according to claim 6 or 7, **characterized in that** the A/D converters (12) can be scanned via a digital bus, e.g. I²C or SPI.

9. Magnetic-inductive flowmeter according to claim 8, **characterized in that** the scanning speed is so high that no samples of the A/D converters (12) are lost.

10. Magnetic-inductive flowmeter according to any one of claims 6 to 9, **characterized in that** the A/D converters (12) store the samples until new measured values are present.

11. Magnetic-inductive flow meter according to any one of claims 3 to 10, **characterized in that** the evaluation unit (9) has an external digital bus interface (13).

12. Magnetic-inductive flowmeter according to any one of claims 3 to 11, **characterized in that** the evaluation unit is implemented in an IP-66, an IP-67 or an IP-68 housing.

13. Magnetic-inductive flowmeter according to any one of claims 3 to 12, **characterized in that** the power supply (8) for the magnetic field generating devices (2) and for the evaluation unit (9) is designed for low voltage.

14. Magnetic-inductive flowmeter according to any one of claims 1 to 13, **characterized in that** at least one functional unit (5), preferably all functional units (5), has or have a circuit arrangement for conductivity measurement, for media recognition and/or for idle detection.

## Revendications

1. Débitmètre magnéto-inductif, comprenant une pluralité d'unités fonctionnelles (5), chaque unité fonctionnelle (5) comportant au moins un tube (1) de mesure du débit d'un milieu électriquement conducteur, un dispositif générateur de champ magnétique (2) destiné à générer un champ magnétique s'étendant au moins également perpendiculairement à l'axe longitudinal du tube de mesure (1) et au moins deux électrodes de mesure (3, 4), la ligne de liaison virtuelle des deux électrodes de mesure (3, 4) s'étendant au moins sensiblement perpendiculairement à la direction du champ magnétique traversant le tube de mesure (1) perpendiculairement à l'axe longitudinal du tube de mesure (1) et les dispositifs générateurs de champ magnétique (2) de toutes les unités fonctionnelles (5) comportant chacun au moins une bobine de champ (10),
**caractérisé en ce que**
le débitmètre électromagnétique comporte un boîtier (6) commun à toutes les unités fonctionnelles (5),
un raccord d'entrée de milieu commun (7) ou un raccord de sortie de milieu commun est réalisé dans le boîtier (6) pour les tubes de mesure (1) de toutes les unités fonctionnelles (5) et
les bobines de champ (10) de toutes les unités fonctionnelles (5) sont montées en série.

2. Débitmètre magnéto-inductif, comprenant une pluralité d'unités fonctionnelles (5), chaque unité fonctionnelle (5) comportant au moins un tube (1) de mesure du débit d'un milieu électriquement conducteur, un dispositif générateur de champ magnétique (2) destiné à générer un champ magnétique au moins également perpendiculaire à l'axe longitudinal du tube de mesure (1) et au moins deux électrodes de mesure (3, 4), la ligne de liaison virtuelle des deux électrodes de mesure (3, 4) s'étendant au moins sensiblement perpendiculairement à la direction du champ magnétique traversant le tube de mesure (1) perpendiculairement à l'axe longitudinal du tube de mesure (1) et les dispositifs générateurs de champ magnétique (2) de toutes les unités fonctionnelles (5) comportant chacun au moins une bobine de champ (10), en particulier selon la revendication 1,
**caractérisé en ce que**
le débitmètre électromagnétique comporte un boîtier (6) commun à toutes les unités fonctionnelles (5),
une alimentation en courant commune (8) est réalisée dans le boîtier (6) pour les dispositifs générateurs de champ magnétique (2) de toutes les unités fonctionnelles (5) et
les bobines de champ (10) de toutes les unités fonctionnelles (5) sont montées en série.

3. Débitmètre magnéto-inductif, comprenant une pluralité d'unités fonctionnelles (5), chaque unité fonctionnelle (5) comportant au moins un tube (1) de mesure du débit d'un milieu électriquement conducteur, un dispositif générateur de champ magnétique (2) destiné à générer un champ magnétique au moins également perpendiculaire à l'axe longitudinal du tube de mesure (1) et au moins deux électrodes de mesure (3, 4), la ligne de liaison virtuelle des deux électrodes de mesure (3, 4) s'étendant au moins sensiblement perpendiculairement à la direction du champ magnétique traversant le tube de mesure (1) perpendiculairement à l'axe longitudinal du tube de mesure (1) et les dispositifs générateurs de champ magnétique (2) de toutes les unités fonctionnelles (5) comportant chacun au moins une bobine de champ (10), en particulier selon la revendication 1 ou 2,
**caractérisé en ce que**
le débitmètre électromagnétique comporte un boîtier (6) commun à toutes les unités fonctionnelles (5),
une unité d'évaluation commune (9) est réalisée dans le boîtier (6) pour les électrodes de mesure (3, 4) de toutes les unités fonctionnelles (5) et
les bobines de champ (10) de toutes les unités fonctionnelles (5) sont montées en série.

4. Débitmètre magnéto-inductif selon la revendication 3, **caractérisé en ce que** l'unité d'évaluation (9) est conçue de telle sorte que les tensions d'électrodes, apparaissant sur les électrodes de mesure (3, 4) des unités fonctionnelles individuelles (5), sont mesurées séparément, mais en parallèle, c'est-à-dire dans des mêmes phases de mesure pour toutes les unités fonctionnelles (5).

5. Débitmètre magnéto-inductif selon l'une des revendications 3 à 4, **caractérisé en ce qu'**un préamplificateur propre (11) est monté en aval de chacune des électrodes de mesure (3, 4) appartenant aux unités fonctionnelles individuelles (5).

6. Débitmètre magnéto-inductif selon l'une des revendications 3 à 5, **caractérisé en ce qu'**un convertisseur A/N propre (12) est monté en aval de chacune des électrodes de mesure (3, 4) appartenant aux unités fonctionnelles individuelles (5).

7. Débitmètre magnéto-inductif selon les revendications 5 et 6, **caractérisé en ce que** les convertisseurs A/N (12) sont montés en aval des préamplificateurs (11).

8. Débitmètre électromagnétique selon la revendication 6 ou 7, **caractérisé en ce que** les convertisseurs A/N (12) peuvent être interrogés par le biais d'un bus numérique, par exemple I²C ou SPI.

9. Débitmètre électromagnétique selon la revendication 8, **caractérisé en ce que** la vitesse d'échantillonnage est si élevée qu'aucune valeur d'échantillonnage du convertisseur A/N (12) n'est perdue.

10. Débitmètre électromagnétique selon l'une des revendications 6 à 9, **caractérisé en ce que** les convertisseurs A/N (12) mémorisent les valeurs d'échantillonnage jusqu'à ce que de nouvelles valeurs de mesure soient disponibles.

11. Débitmètre électromagnétique selon l'une des revendications 3 à 10, **caractérisé en ce que** l'unité d'évaluation (9) comporte une interface de bus numérique externe (13).

12. Débitmètre électromagnétique selon l'une des revendications 3 à 11, **caractérisé en ce que** l'unité d'évaluation est réalisée dans un boîtier IP-66, IP-67 ou IP-68.

13. Débitmètre électromagnétique selon l'une des revendications 3 à 12, **caractérisé en ce que** l'alimentation en courant (8) des dispositifs générateurs de champ magnétique (2) et de l'unité d'évaluation (9) est conçue pour une basse tension.

14. Débitmètre électromagnétique selon l'une des revendications 1 à 13, **caractérisé en ce qu'**au moins une unité fonctionnelle (5), de préférence toutes les unités fonctionnelles (5), comportent un circuit de mesure de conductivité, de détection de milieu et/ou de détection de fonctionnement à vide.
